# EUROPEAN PATENT APPLICATION

(11) **EP 4 484 362 A1**
(43) Date of publication of application: **01.01.2025**
(21) Application number: 23181327.0
(22) Date of filing: 24.06.2023
(51) Int. Cl.: C01B 3/32, B01J 19/08

(54) **PLASMA REFORMER FOR VTOL**

(71) Applicant: Susok, Tobias, 72072 Tübingen (DE)
(72) Inventor: Susok, Tobias, 72072 Tübingen (DE); Khan, Akib, 73728 Esslingen am Neckar (DE); Osman, Benis S., 70174 Stuttgart (DE); Kottakalam, Saraschandran, 73728 Esslingen am Neckar (DE)
(74) Representative: Mzb PartmbB

(57) **Abstract**

The disclosure generally pertains a vertical take-off and landing (VTOL) aircraft comprising a hydrogen fuel-cell system and at least one reformer to generate a fuel for the hydrogen fuel-cell. The reformer may use a plasma to reform a mixture of methanol and water carried by an airstream and to produce hydrogen for the fuel-cell.

## Description

### Technical Field

The invention relates to the product and processes as per the first portion of the independent claims.

### Background Art/Problem to be solved

The field of aviation encompasses many different versions of personal or commercial aircraft. The vast majority of available and affordable aircraft use internal combustion engines for propulsion. These combustion engines usually burn one or multiple sorts of fossil fuels.

Since aviation is a constant, high-power battle against gravity, energy sources of aircraft need to be safe as well as energy dense and light, prohibiting large batteries or heavy tanks and cryogenic fuels.

In recent years a growing awareness of the impact that the emissions of burning fossil fuels have on global warming as well as environmental pollution and dependencies on non-democratic suppliers of those fuels, has led to a desire of reducing those emissions and dependencies.

In contrast, hydrogen or hydrogen derived fuels can be produced and burned cleanly and sustainably with minimal impact on the environment. Since hydrogen or hydrogen derived fuels at the moment are scarce and hard to produce, using them in the most efficient way is well advised. Hydrogen as a fuel in its pure molecular form needs either heavy pressure vessels to be contained or has to be cryogenically cooled to be condensed into its liquid state. In contrast hydrogen bearing fuels like methanol are liquid under standard conditions and do not need pressure vessels or cooling, but cannot be used in hydrogen fuel cells without further processing.

The following invention therefore describes a system for an aircraft (VTOL) that converts a liquid, hydrogen bearing fuel, especially methanol, into hydrogen to be used in a hydrogen fuel cell of the VTOL.

### Summary of invention

The invention is set out in the appended set of claims.

### Brief description of drawings

Fig.1 shows an outside view of the herein mentioned reformer
Fig.2 shows the cross-section A-A
Fig.3 shows the geometry of the electrodes for a Coronal Discharge Reformer
Fig.4 Shows a cross-section of the Reformer of Figure 3

### Description of embodiments

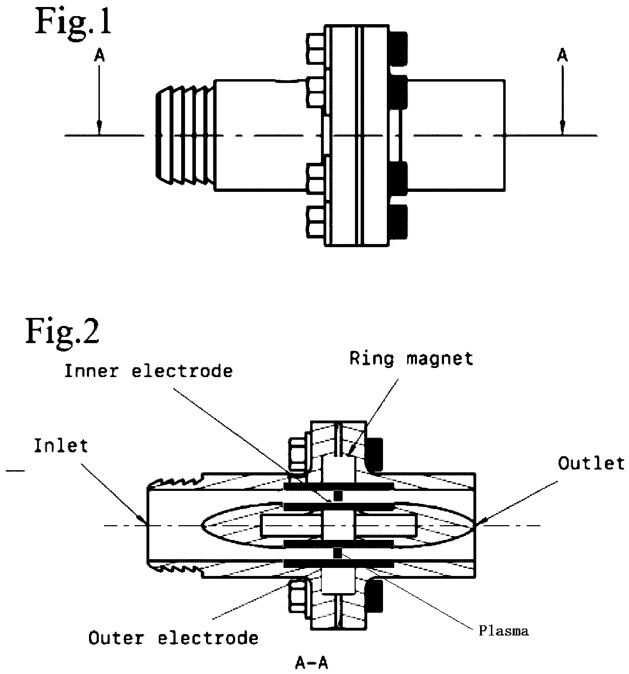

The Reformer shown in Figure 1 essentially consists of a two-part housing made from a polymer material. The housing comprises an inlet and an outlet. Both parts of the housing are detachably connected via screws or the like.

The functional elements of the reformer are shown in Figure 2 and consist of two electrodes concentrically arranged inside of a ring magnet. A plasma is produced between the two electrodes. The reformer as shown in Figures 1 and 2 has no moving parts.

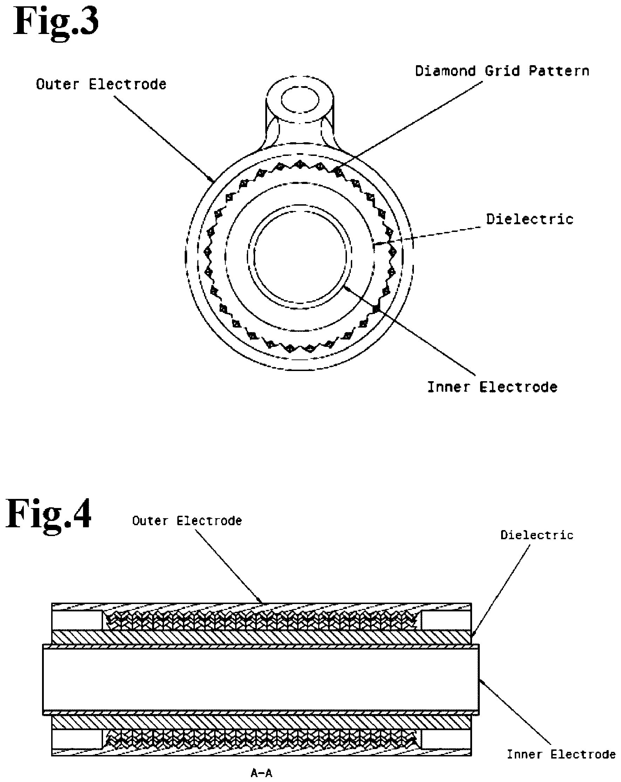

In another embodiment, the two electrodes are separated by a dielectric insulator between them as shown in Figure 3. The insulator prohibits a flow of electricity between the two electrodes leading to a coronal discharge plasma, when voltage is applied to the electrodes.

The coronal discharge is aided by a spiked or diamond grid patterned surface of at least one electrode, forming hills and valleys, the size of which determine the number and size of individual discharges.

The spiked surface preferably forms helix shaped hills and valleys, that impose a rotation as well as a turbulent flow on an airflow between them. The rotation can be aided by a magnetic field.

A coronal discharge plasma has the advantage of being a "cold" plasma, producing less heat loss than a conventional plasma allowing for a smaller packaging and a more efficient operation of the reformer.

To start the reforming process and to generate the plasma, an energy source is needed. To make the reformer black start capable, it is combined with a rechargeable battery, for example a LiFePo or Li-Ion Battery
It can be necessary to combine the reformer with devices to monitor or regulate the operation, known to those skilled in the art, like sensors, valves or guiding structures but not limited thereto.

All parts of the reformer, the housing, as well as the electrodes and magnet, are either readily available or can be produced in a number of different methods, known to those skilled in the art, like injection moulding or additive manufacturing but not limited thereto.

To produce a plasma, a high voltage is supplied across the inner and outer electrodes. The supplied voltage is equal to or higher than 5.000 Volts. A magnetic field of the ring magnet spins the plasma rapidly, thereby maximizing the cross section of the plasma that comes in contact with a vaporized mixture of methanol and water, compared to a non-spinning plasma arc. The plasma spins with a multiple dozen revolutions per second.

The vaporized mixture of methanol and water is carried by an airstream, through the inlet of the reformer and into the spinning plasma to be split into hydrogen and by-products. The hydrogen and by-products exit the reformer through the Outlet.

After exiting the reformer, the hydrogen is then filtered from the by-products and supplied to a hydrogen fuel cell, especially a PEM fuel cell. The filtering can be performed using different principles, comprising mechanical, inertial, chemical or electromagnetic filtering techniques
The present embodiment produces a small, lightweight reformer, with a minimal number of parts, that fits in the palm of a hand. By reducing the number of parts, and forgoing the use of moveable parts, the reliability of the reformer is maximized. The high reliability, low weight and simplicity of the reformer combined with its ability to produce large quantities of fuel predestines it for use in aircraft applications. The reformer produces an amount of hydrogen for a fuel cell, that is suitable to generate enough propulsion for a vertically starting aircraft (VTOL)
To catch load peaks during operation of the VTOL, the recharcheable battery is sized in a manner that it can support the reformer and fuel cell by providing supplemental energy to maintain safe flight operations even in high load cases like take-off of heavy lifting, but not limited thereto.

In another aspect, the battery buffers differences between energy provided by the reformer and fuel cell and energy used by the propulsion system and auxiliary users of the VTOL, therefore maintaining a mostly uniform operation of the reformer and fuel cell
By providing large amounts of energy in the reformer-fuel cell-battery compound, the VTOL can be equipped with a multitude of different functional elements in a modular fashion for example heavy lifting cranes, defibrillators, sophisticated sensor equipment, searchlights, personal rescue equipment or freight containers, but not limited thereto. The VTOL can also be used as a remote energy source in hard-to-reach places with a power outlet module.

### Citation list

The following documents are cited hereinbefore.

### Patent literature

DE102019102189A1
US10446373B2
US20150252757A1
US20150252757A1

## Claims

1. A reformer for producing fuel for a hydrogen fuel cell from a liquid methanol/water mixture by means of a plasma, **characterised in that** the reformer comprises two electrodes through which the mixture is flowed in a turbulent, rotational manner.

2. The reformer according to claim 1, **characterised in that** the Plasma is a thermal or coronal discharge plasma

3. The reformer according to any of the preceding claims, **characterised in that** the electrodes form hills and valleys

4. A reformer according to any one of the preceding claims, **characterised in that** the plasma is generated between an inner and an outer electrode of the reformer.

5. A reformer according to any one of the preceding claims, **characterised in that** the plasma is set in rotation by means of the magnet.

6. A reformer according to any one of the preceding claims, **characterised in that** the plasma is set in rotation by the geometry of the electrodes.

7. A reformer according to claim 3, **characterised in that** the magnet is a ring magnet.

8. The reformer according to any of the preceding claims, **characterised in that** the methanol/water mixture is atomised and carried by an air stream.

9. A reformer according to any one of the preceding claims, **characterised in that** the plasma rotates faster than twelve revolutions per second.

10. A reformer according to any one of the preceding claims, **characterised in that** the plasma is generated using a voltage of 5,000 volts or more.

11. Reformer according to one of the preceding claims, **characterised in that** no moving parts are arranged inside the reformer.

12. A reformer according to any one of claims 1-7, **characterised in that** the reformer includes valves, throttles or the like for controlling the gas flow.

13. A reformer according to any one of the preceding claims, **characterised in that** the reformer includes sensors for monitoring operation.

14. A reformer according to any one of the preceding claims, **characterised in that** the hydrogen is diamagnetically separated from the by-products with the aid of a strong magnetic field.

15. Fuel cell system according to claim 1, **characterised in that** the hydrogen is separated from by-products of the reformation by filtering.

16. Vertical take-off aircraft with a reformer according to any of the preceding claims

17. A method of operating a vertical take-off aircraft, **characterised in that** power for operating the aircraft is provided by a reformer according to any one of the preceding claims.
